(19) **Europäisches Patentamt**

**European Patent Office**

**Office européen des brevets**

(11) Publication number : **0 466 674 A1**

(12) # EUROPEAN PATENT APPLICATION

(21) Application number : **91870110.3**

(22) Date of filing : **12.07.91**

(51) Int. Cl.⁵ : **A23L 3/34,** C09K 15/00, A23D 7/06, A23D 9/06

(30) Priority : **13.07.90 US 552285**

(43) Date of publication of application : **15.01.92 Bulletin 92/03**

(84) Designated Contracting States : **AT BE CH DE DK ES FR GB GR IT LI LU NL SE**

(71) Applicant : **MONSANTO COMPANY 800 North Lindbergh Boulevard St. Louis Missouri 63167 (US)**

(72) Inventor : **Shermer, William Duane 1076Briarhurst Drive Ballwin, Missouri 63021 (US)**

(74) Representative : **Nash, Brian Walter et al Monsanto Services International S.A. Patent Department, Avenue de Tervuren 270/272, Letter Box No. 21 B-1150 Bruxelles (BE)**

(54) **Antioxidant for yellow grease.**

(57)    An antioxidant for animal fats, vegetable oils and mixtures thereof comprising ethoxyquin (1,2-dihydro-6-ethoxy-2,2,4-trimethylquinoline) in combination with phosphoric acid and, optionally t-butylhydroquinone. The compositions are particularly effective in stabilizing mixtures of animal fats and vegetable oils recovered from restaurants and rendering plants, a product commonly known as yellow grease and used as an animal feed supplement. The compositions containing t-butylhydroquinone are effective stabilizers for 100% vegetable oil.

EP 0 466 674 A1

EP 0 466 674 A1

## FIELD OF INVENTION

This invention relates to an antioxidant composition for edible fats and oils and, more particularly, to an antioxidant for yellow grease comprising mixed fats and oils of animal and vegetable origin and intended for use as an animal feed supplement.

## BACKGROUND OF THE INVENTION

Animal fats and vegetable oils are widely used as a high energy feed supplement for poultry and large farm animals. Animal fats for such use are obtained as a poultry by-product and from large animal rendering plants. Vegetable oils are obtained as waste from various cooking processes and may include soybean, canola, rapeseed, corn, palm olive and other oils. Used cooking grease from restaurants, particularly from the fast food industry, comprise a mixture of animal and vegetable fats and oils and is a major source of these materials for use in animal feeds.

Fat contains about 2.5 times the energy value of carbohydrate energy sources and can help eliminate bulky ingredients from animal feeds which are either poorly metabolized or are of no value to the performance of the animal. For example, research has shown that growing chicks can utilize at least 15% fat in their diet and actually respond in improved growth rate and feed conversion provided the feed ration is properly balanced with respect to amino acids and energy. Fat is a rather fragile product however, subject to degradation by oxidation and hydrolytic rancidity, and such degradation can impact seriously on feed quality and resulting animal performance.

Recycled restaurant grease and low grade fats from large animal rendering plants is commonly referred to in the industry as "yellow grease", reflecting its typical color and varied origin. Used restaurant grease is generally stored on site until collected by recyclers who reprocess the grease to remove solids, moisture and decomposition products. Antioxidants may be added to the grease in the storage tank at the restaurant and are usually added for the recovery operation to retard further decomposition during the cooking and dehydration steps. Antioxidants are also commonly added to the raw materials during recovery of fats from poultry by-products and during large animal rendering operations in order to retard oxidation. Finally, antioxidants may be added to the recovered fats and oils after processing to stabilize the material during storage and until used as a feed supplement.

Chemically, fat in its purest sense consists of glycerol and from 1-3 long chain fatty acids. The fatty acids can be attached to the glycerol at the 1, 2 or 3 position. One molecule of fatty acid attached to glycerol is termed a monoglyceride; 2 molecules of fatty acid is a diglyceride and 3 molecules of fatty acid is a triglyceride. The nutritional and chemical characteristics of a particular fat are determined by the number and kind of fatty acids attached to the glycerol. The oxidation of fat results in the generation of free radicals and the eventual formation of organic peroxides. During the oxidation process, the free radicals can attack fat soluble nutrients such as vitamins A, D and E, xanthophyll pigments and other vital lipid systems of the fat. In addition to the destruction of essential nutrients, the metabolizable energy value of the fat is also reduced. This leads to a reduction in efficiency of feed utilization by the animal.

An effective antioxidant added to the fat intercepts the free radicals as they are formed and removes them from the reaction sequence. One highly effective antioxidant for animal fats which has found wide application in the animal feed industry is ethoxyquin (6-ethoxy-1,2-dihyro-2,2,4-trimethylquinoline), available from Monsanto Company, St. Louis, Missouri under the tradename Santoquin. When added to a refined fat before the onset of oxidation, ethoxyquin effectively intercepts free radicals as they form during the initiation phase of the oxidation reaction and reduces the ultimate formation of organic peroxides.

Although ethoxyquin has been highly effective in stabilizing animal fats against oxidation, it has been less effective in stabilizing mixtures of animal fats with 20% or more vegetable oil. Accordingly, it is an object of the present invention to provide an improved stabilizer for such mixtures of animal fats and vegetable oils. It is a further object of this invention to provide an effective antioxidant for yellow grease comprising mixtures of animal fat and vegetable oil intended for use as animal feed supplements. These and other objects of the present invention will be apparent from the ensuing description and claims.

## SUMMARY

The antioxidant of the present invention which is effective to stabilize mixtures of animal fats with 20% or more vegetable oil comprises the combination of ethoxyquin with phosphoric acid and/or t-butylhydroquinone (TBHQ). The combination of ethoxyquin and phosphoric acid is effective to stabilize animal fats containing up to about 40% vegetable oil. The combination of ethoxyquin with phosphoric acid and TBHQ is effective to stabi-

2

lize animal fats containing higher levels of vegetable oil. Typical antioxidant formulations for mixtures of animal fat containing more than 10% vegetable oil comprise 50-1000 ppm ethoxyquin, 50-500 ppm phosphoric acid and 25-200 ppm TBHQ. Such formulations are also effective to stabilize 100% vegetable oil.

DESCRIPTION

The most common test used by the industry to determine fat stability is the 20 hour Active Oxygen Method (A.O.M.) in which a sample of the fat is maintained at 98°C while scrubbed air is bubbled through at a controlled rate. A sample having a peroxide value (P.V.) of 20 meq/kg or less after 20 hours under test conditions is considered acceptable for use in animal feed, while a P.V. of 10 meq/kg or less is considered most desirable. The apparatus and operating conditions for the 20 hour AOM test are generally as described in AOCS Official Method Cd 12-57 (reapproved 1973) entitled "Fat Stability, Active Oxygen Method". According to the AOCS official method, the time in hours required for a sample of fat or oil to attain a certain peroxide value under the specific conditions of the test is determined, and the length of that period is taken as an index of resistance to rancidity. In the method used in the following examples, the test was conducted for a period of 22 hours while sampling periodically to establish the maximum peroxide value attained during that period of time. The performance of the antioxidant compositions of the present invention of and various prior art materials in this 22 hour AOM Test are illustrated by the following examples where all percentages and ppm are by weight.

Example 1

The effect of various stabilizers on the oxidation of a laboratory formulated composition ranging from 100% animal fat to 100% vegetable oil was evaluated in the 22 hour AOM test described above. The test compositions were prepared by mixing refined animal tallow with soybean oil in various ratios. The compositions and stabilizers evaluated and the results obtained in the test are presented in Table I below:

## TABLE I

### Peroxide Values, meq/kg
### 22 Hr. A.O.M. Test

| Stabilizer, ppm | | | Tallow/Oil Composition (%) | | | | | |
| EQ | PA | TBHQ | 100/0 | 80/20 | 60/40 | 40/60 | 20/80 | 0/100 |
| --- | --- | --- | --- | --- | --- | --- | --- | --- |
| -- | -- | -- | 2.8 | 8.6 | 29.2 | 84.2 | 112.3 | 271.1 |
| 500 | -- | -- | 1.1 | 6.5 | 21.8 | 66.7 | 108.5 | 235.6 |
| -- | 200 | -- | 13.6 | 9.3 | 24.3 | 65.4 | 136.9 | 224.9 |
| 500 | 200 | -- | .6 | 1.8 | 2.4 | 10.8 | 89.6 | 236.5 |
| 143 | 200 | 57 | .7 | 1.6 | 1.9 | 7.8 | 14.8 | 6.1 |

The above data illustrate the decreasing effectiveness of ethoxyquin (EQ) as an antioxidant for these formulated compositions at concentrations of vegetable oil above 20%. In the above data, the refined tallow is seen to be relatively stable to oxidation even in the absence of any antioxidant, while the vegetable oil is seen to be highly unstable. Ethoxyquin alone has little effect on the stability of the vegetable oil or the mixtures of tallow with vegetable oil evaluated in the test. Phosphoric acid (PA) alone appears to have a negative effect on the stability of the tallow and no significant effect on the stability of mixtures of tallow and vegetable oil. The combination of ethoxyquin and phosphoric acid, however, shows a synergistic effect as an antioxidant for compositions containing at least up to about 60% vegetable oil. The combination of ethoxyquin, phosphoric acid and TBHQ is seen to be effective over the entire range of compositions from 100% tallow to 100% vegetable oil.

Example 2

The stabilizer compositions of Example 1 were evaluated in five samples of yellow grease obtained from commercial sources and having unspecified compositons comprising animal fat and vegetable oil. Yellow grease contains a variety of impurities which render the composition inherently less stable to oxidation than the formulated tallow/soybean oil compositions of Example 1. The results of the stability tests are shown in Table II below:

EP 0 466 674 A1

## TABLE II

## Peroxide Values, meq/kg
## 22 Hr. A.O.M. Test

| Stabilizer, ppm | | | Yellow Grease Sample No. | | | | | |
|---|---|---|---|---|---|---|---|---|
| EQ | PA | TBHQ | 1 | 2 | 3 | 4 | 5 | Avg |
| -- | -- | -- | 117.7 | 64.1 | 120.5 | 117.3 | 91.8 | 102.3 |
| 500 | -- | -- | 127.1 | 17.0 | 26.7 | 101.6 | 17.4 | 58.0 |
| -- | 200 | -- | 20.9 | 2.2 | 12.3 | 10.0 | 9.9 | 11.1 |
| 500 | 200 | -- | 10.6 | 1.6 | 2.4 | 3.1 | 1.7 | 3.9 |
| 143 | 200 | 57 | 1.8 | 2.0 | 1.4 | 1.4 | 4.6 | 2.2 |

As expected, the above data shows some variability between samples in the stability of yellow grease due to variations in the amount and kind of animal fat, vegetable oil and impurities which happen to be present. Ethoxyquin alone produced marginal results, with only two samples showing peroxide values of less than the accepted maximum of 20 meq/kg. Phosphoric acid alone produced somewhat better results, with three of the samples having peroxide values of 10 meq/kg or less. As in Example 1, however, the results of the combination of ethoxyquin and phosphoric acid were consistently very good with only one sample having a peroxide value above 5 meq/kg. Excellent results were also obtained on all samples with the combination of ethoxyquin, phosphoric acid and TBHQ.

### Example 3

A series of tests were run to evaluate various stabilizer compositions against a single yellow grease composition which was a blend of the five samples evaluated in Example 2. The stabilizer compositions and the results obtained are set forth in Table 111 below:

## TABLE III

## Peroxide Values, meq/kg
## 22 Hr. A.M.O. Test

| Stabilizer, ppm | | | Yellow Grease Run | | | | |
|---|---|---|---|---|---|---|---|
| EQ | PA | TBHQ | A | B | C | D | Avg |
| -- | -- | -- | 98.9 | 75.8 | 85.2 | 113.3 | 93.3 |
| 500 | -- | -- | 43.7 | 35.4 | -- | 90.2 | 56.4 |
| -- | 200 | -- | 15.0 | -- | -- | -- | 15.0 |
| 500 | 200 | -- | 4.7 | 5.3 | 5.0 | 6.8 | 5.4 |
| 143 | 200 | 57 | 4.1 | -- | -- | -- | 4.1 |
| -- | -- | 200 | 67.5 | -- | -- | 106.2 | 86.8 |
| 500 | 50 | -- | -- | 6.5 | -- | -- | 6.5 |
| 500 | 500 | -- | -- | 1.4 | -- | -- | 1.4 |
| 250 | 50 | -- | -- | -- | 8.6 | -- | 8.6 |
| 250 | 200 | -- | -- | -- | 7.2 | -- | 7.2 |
| 250 | 500 | -- | -- | -- | 1.6 | -- | 1.6 |

As shown by the above data, TBHQ alone is not an effective stabilizer for yellow grease, while the combination of ethoxyquin and phosphoric acid and ethoxyquin, phosphoric acid and TBHQ produced consistently good results although the effect attributable to TBHQ appears marginal in this test.

### Example 4

Six samples of yellow grease obtained from different commercial sources and having unspecified compositions were evaluated in the 22 hour A.O.M. test with ethoxyquin, phosphoric acid, TBHQ, and several commercially available antioxidants as identified in Table IV below:

4

## TABLE IV

### Peroxide Values, meq/kg
### 22 Hr. A.O.M. Test

**A. Stabilizer, ppm**

| EQ | PA | TBHQ | 6 | 7 | 8 | 9 | 10 | 11 |
|----|----|------|---|---|---|---|----|----|
| -- | -- | -- | 227 | 180 | 198 | 56.9 | 168 | 101 |
| 500 | -- | -- | 251 | -- | 10.5 | 81.1 | 117 | -- |
| -- | 200 | -- | -- | -- | -- | -- | 9.9 | -- |
| 500 | 200 | -- | 7.0 | 6.0 | 3.7 | 1.1 | 5.7 | 5.1 |
| 143 | 200 | 57 | -- | -- | -- | -- | -- | 1.7 |
| -- | -- | 200 | 228 | -- | 42.8 | 55.0 | -- | -- |
| 500 | -- | 200 | -- | -- | -- | -- | -- | 128 |

**B. Stabilizer, ppm**

| | | 6 | 7 | 8 | 9 | 10 | 11 |
|---|---|---|---|---|---|----|----|
| BHA (200) | | -- | 217 | -- | -- | -- | -- |
| Propyl Gallate (200) | | -- | 168 | -- | -- | -- | -- |
| DLTDP (200) | | -- | 205 | -- | -- | -- | -- |
| EQ (500) + EDTA (200) | | -- | -- | -- | -- | -- | 106 |

BHA   = butylated hydroxyanisole
DLTDP = dilauryl thiodipropionate
EDTA  = ethylenediamine tetraacetic acid

The data in part A of Table IV again illustrates the effectiveness of the ethoxyquin/ phosphoric acid and ethoxyquin/phosphoric acid/ TBHQ stabilizer compositions. The data also confirm the results obtained in Example 3 showing that TBHQ alone is not an effective stabilizer for yellow grease. The data further indicate by a single example that the combination of ethoxyquin and TBHQ without phosphoric acid is not an effective stabilizer for these compositions.

The data in part B of Table IV demonstrate that other commercial antioxidants often suggested for the stabilization of edible fats and oils are not effective stabilizers for yellow grease.

Example 5

A preferred composition of the present invention comprising 150 ppm EQ, 200 ppm PA and 50 ppm TBHQ was evaluated against TBHQ alone in the stabilization of 100% soybean oil with the following results:

## TABLE V

### Soybean Oil
### 22 Hr. A.O.M. Test

| Stabilizer | | | Peroxide Value |
|----|----|------|----------------|
| EQ | PA | TBHQ | meq/kg |
| -- | -- | -- | 198.4 |
| -- | -- | 50 | 7.1 |
| -- | -- | 100 | 2.4 |
| -- | -- | 200 | 2.1 |
| 150 | 200 | 50 | 4.8 |

The antioxidant compositions of the present invention which are effective to stabilize yellow grease and other mixtures of animal fat and vegetable oil may be formulated as mixtures comprising one part ethoxyquinone, from 0.1 to 2 parts phosphoric acid and optionally from 0.1 to 1 part TBHQ. Each antioxidant formulation may be added to the fat/oil mixture in amounts to provide from about 50 to 1000 ppm ethoxyquinone.

Preferred antioxidant compositions are those which provide from about 100 to 500 ppm ethoxyquin, from about 50 to 200 ppm phosphoric acid and, for mixtures containing more than about 60% vegetable oil, from about 50 to 100 ppm t-butylhydroquinone. The optimum formulation for any given application will depend upon such variables as the relative amount and kind of animal fat and vegetable oil present in the system, the purity of the fat/oil mixture, and the conditions under which the mixture will be subject to oxidation. Optimum antioxidant formulations are accordingly best established emperically for each system within the guidelines provided in the above description and examples.

## Claims

1. An antioxidant composition comprising 1 part ethoxyquin and from about 0.1 to 2 parts phosphoric acid.

2. The composition of Claim 1 additionally comprising from about 0.1 to 1 part t-butylhydroquinone.

3. A method for inhibiting the oxidation of animal fats and mixtures of animal fats and vegetable oils which comprises adding thereto an oxidation inhibiting amount of the composition of Claim 1.

4. The method of Claim 3 wherein said composition is added in an amount sufficient to provide from about 50 to 1000 ppm ethoxyquin.

5. The method of Claim 3 wherein said composition is added in an amount sufficient to provide from about 50 to 1000 ppm ethoxyquin and from about 50 to 500 ppm phosphoric acid.

6. The method of Claim 3 wherein said composition is added in an amount sufficient to provide from about 100 to 500 ppm ethoxyquin and from about 50 to 200 ppm phosphoric acid.

7. A method for inhibiting the oxidation of animal fats, vegetable oils and mixtures thereof which comprises adding thereto an oxidation inhibiting amount of the composition of Claim 2.

8. The method of Claim 7 wherein said composition is added in an amount sufficient to provide from about 50 to 1000 ppm ethoxyquin.

9. The method of Claim 7 wherein said composition of Claim 1 is added in an amount sufficient to provide from about 50 to 1000 ppm ethoxyquin, from about 50 to 500 ppm phosphoric acid, and from about 25 to 200 ppm t-butylhydroquinone.

10. The method of Claim 7 wherein said composition is added in an amount sufficient to provide from about 100 to 500 ppm ethoxyquin, from about 50 to 200 pm phosphoric acid, and from about 50 to 100 ppm t-butylhydroquinone.

11. The method of Claim 7 wherein said composition is added in an amount sufficient to provide about 150 ppm ethoxyquin, about 200 ppm phosphoric acid, and about 50 ppm t-butylhydroquinone.

European Patent
Office

**EUROPEAN SEARCH REPORT**

Application Number

| | DOCUMENTS CONSIDERED TO BE RELEVANT | | EP 91870110.3 |
|---|---|---|---|
| Category | Citation of document with indication, where appropriate, of relevant passages | Relevant to claim | CLASSIFICATION OF THE APPLICATION (Int. Cl.5) |
| Y | US - A - 3 284 212 (T.B. TRIBBLE et al.) * Column 3, lines 54-68; claims * | 1-3,7 | A 23 L 3/34 C 09 K 15/00 A 23 D 7/06 A 23 D 9/06 |
| Y | "HANDBUCH DER LEBENSMITTEL-CHEMIE", vol. IV: "Fette und Lipoide (Lipids)". J. Schormüller, 1969, Springer-Verlag, Berlin, Heidelberg, New York pages 313-322 * Pages 314,317,318,321 * | 1-3,7 | |
| A | DE - A - 3 432 120 (KARWENDEL-WERKE) * Page 7, line 23 - page 8, line 12 * | 1,3 | |
| A | GB - A - 955 316 (MONSANTO) * Page 2, lines 13-80 * | 1-11 | TECHNICAL FIELDS SEARCHED (Int. Cl.5) A 23 L 3/00 C 09 K 15/00 A 23 D A 23 K 3/00 |

The present search report has been drawn up for all claims

| Place of search | Date of completion of the search | Examiner |
|---|---|---|
| VIENNA | 30-09-1991 | IRMLER |

EPO FORM 1503 03.82 (P0401)